# EUROPÄISCHE PATENTSCHRIFT

(11) **EP 4 711 237 B1**
(45) Veröffentlichungstag und Bekanntmachung des Hinweises auf die Patenterteilung: **26.08.2026**
(21) Anmeldenummer: 25200508.7
(22) Anmeldetag: 05.09.2025
(51) Int. Cl.: B62D 5/04, B62D 5/00

(54) **ELEKTROMECHANISCHES LENKSYSTEM UND VERFAHREN ZUM BETREIBEN EINES ELEKTROMECHANISCHEN LENKSYSTEMS MIT REDUZIERTER ENERGIERÜCKSPEISUNG**
ELECTROMECHANICAL STEERING SYSTEM AND METHOD FOR OPERATING AN ELECTROMECHANICAL STEERING SYSTEM WITH REDUCED ENERGY RETURN
SYSTÈME DE DIRECTION ÉLECTROMÉCANIQUE ET PROCÉDÉ DE FONCTIONNEMENT D'UN SYSTÈME DE DIRECTION ÉLECTROMÉCANIQUE À RETOUR D'ÉNERGIE RÉDUIT

(30) Priorität: 11.09.2024 BE 202405613
(43) Veröffentlichungstag der Anmeldung: 18.03.2026
(73) Patentinhaber: thyssenkrupp Presta Aktiengesellschaft, 9492 Eschen (LI); thyssenkrupp AG, 45143 Essen (DE)
(72) Erfinder: Gyökeres, Jenö, 1097 Budapest (HU); Bakos, Dezsö, 6800 Feldkirch (AT); Károly, Tamás Gergely, 9466 Sennwald (CH)
(74) Vertreter: thyssenkrupp Intellectual Property GmbH

(56) Entgegenhaltungen:
- DE-A1- 102016 209 834
- DE-A1- 102019 101 811
- DE-A1- 102023 201 346
- US-A1- 2023 356 770
- US-A1- 2024 067 259
- US-B2- 10 454 395

## Beschreibung

Die Erfindung betrifft ein Verfahren zum Betreiben eines elektromechanischen Lenksystems in einem Kraftfahrzeug, wobei das Lenksystem einen ersten Aktuator mit einem ersten Elektromotor umfasst, wobei der erste Elektromotor fahrsituationsabhängig in einem Motorbetrieb oder einem Generatorbetrieb betrieben wird. Der erste Elektromotor wird in dem Generatorbetrieb so angesteuert, dass ein in dem Generatorbetrieb des ersten Elektromotors generierter Strom von dem ersten Elektromotor energetisch umgewandelt wird, wobei der erste Elektromotor von einer ersten Steuereinheit mittels einer Vektorregelung gesteuert wird, wobei ein d-Vektor mit einem zugeordneten Strom I_d und ein q-Vektor mit einem zugeordneten Strom I_q eines rotorbezogenen d/q-Systems für den ersten Elektromotor mittels eines ersten Reglers der ersten Steuereinheit beeinflusst werden, und wobei zur energetischen Umwandlung eines von dem ersten Elektromotor in dem Generatorbetrieb generierten Stroms der d-Vektor des rotorbezogenen d/q-Systems für den ersten Elektromotor angepasst wird. Der erste Aktuator kann dabei insbesondere ein Feedback-Aktuator oder ein Lenksteller sein. Des Weiteren betrifft die Erfindung ein elektromechanisches Lenksystem, das einen ersten Aktuator mit einem ersten Elektromotor und einer ersten Steuereinheit umfasst, wobei der erste Elektromotor fahrsituationsabhängig in einem Motorbetrieb oder einem Generatorbetrieb betrieben werden kann, wobei der erste Aktuator insbesondere ein Feedback-Aktuator oder ein Lenksteller ist.

Im Stand der Technik sind ein solches Verfahren für ein Steer-by-Wire-Lenksystem als elektromechanisches Lenksystem und ein Steer-by-Wire-Lenksystem mit einem Feedback-Aktuator als erstem Aktuator und einem Lenksteller als zweitem Aktuator beispielsweise aus der EP 4 273 025 A1 bekannt. DE 10 2023 201346 A1 offenbart den Oberbegriff des Anspruchs 1.

Bei einem Betrieb eines Elektromotors eines Aktuators des Lenksystems in einem Generatorbetrieb ist problematisch, dass hierbei elektrische Ströme generiert werden, weil die Gleichspannungsquelle und/oder der Anschluss an die Gleichspannungsquelle eines Bordnetzes eines Kraftfahrzeugs insbesondere aus Kostengründen nicht oder bei neueren Fahrzeugen, die nicht lediglich eine klassische Starterbatterie (Autobatterie) umfassen, nicht mehr zur Aufnahme solcher generierten Ströme geeignet sind. Die generierten Ströme können daher Schäden an Elektronikkomponenten verursachen. So sind herkömmliche Fahrzeugbatterien, die insbesondere in Kraftfahrzeugen mit ausschließlich einem Verbrennungsmotor eingesetzt werden, zwar häufig geeignet, solche generierten Ströme aufzunehmen. Neuere Auslegungen von Bordnetzen mit einer höheren Bordnetzspannung und eine Bereitstellung der Betriebsspannung über eine Antriebsbatterie bei Hybrid- oder Elektrofahrzeugen machen das Zwischenschalten eines DC/DC-Wandlers (DC: direct current) erforderlich, der insbesondere aus Kostengründen nicht dazu ausgelegt ist, generierte Ströme aufzunehmen oder rückzuführen. Diese Problematik wird auch in der DE 10 2021 205 851 A1 thematisiert, wobei in dieser Druckschrift vorgeschlagen wird, nicht benötigte Verbraucher zuzuschalten, wenn durch eine Rückspeisung eine Überspannung im Bordnetz bewirkt würde.

Nachteilig dabei ist, dass auf diese Weise ein Betreiben eines elektromechanischen Lenksystems in einem Kraftfahrzeug insbesondere davon abhängen kann, wie ein Bordnetz in einem Kraftfahrzeug betrieben wird. Diesem Nachteil wird mit der technischen Lehre gemäß der gattungsgemäßen DE 10 2023 201 346 A1 begegnet. Darin wird eine Umwandung des generierten elektrischen Stroms in dem Elektromotor des Lenksystems vorgeschlagen, wobei unter Nutzung einer feldorientierten d/q-Regelung ein angepasster Strom I_d erzeugt wird.

Vor diesem Hintergrund ist es eine Aufgabe der vorliegenden Erfindung, ein verbessertes Verfahren zum Betreiben eines elektromechanischen Lenksystems und ein verbessertes elektromechanisches Lenksystem bereitzustellen. Insbesondere soll dabei verhindert werden, dass in einem Generatorbetrieb eines Elektromotors eines Aktuators des Lenksystems Schäden durch die generierten elektrischen Ströme entstehen.

Zur Lösung dieser Aufgabe werden ein Verfahren zum Betreiben eines elektromechanischen Lenksystems und ein elektromechanisches Lenksystem gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Betreiben eines elektromechanischen Lenksystems, insbesondere eines Steer-by-Wire-Lenksystems, in einem Kraftfahrzeug vor, wobei das Lenksystem einen ersten Aktuator mit einem ersten Elektromotor umfasst. Der erste Elektromotor wird fahrsituationsabhängig in einem Motorbetrieb oder einem Generatorbetrieb betrieben, wobei der erste Elektromotor in dem Generatorbetrieb so angesteuert wird, dass ein in dem Generatorbetrieb des ersten Elektromotors generierter Strom von dem ersten Elektromotor energetisch umgewandelt wird. Insbesondere wird der Phasenwiderstand des Motors für die Kompensation des regenerativen Gleichstroms verwendet. Vorteilhafterweise wird der erste Elektromotor von einer ersten Steuereinheit mittels einer Vektorregelung gesteuert. Die erste Steuereinheit ist insbesondere eine dem ersten Aktuator zugeordnete Steuereinheit, weiter insbesondere eine dem Feedback-Aktuator zugeordnete Steuereinheit, und kann insbesondere von einem sogenannten Power-Pack umfasst sein. Bei der Vektorregelung werden ein d-Vektor mit einem zugeordneten Strom I_d und ein q-Vektor mit einem zugeordneten Strom I_q eines rotorbezogenen d/q-Systems für den ersten Elektromotor mittels eines ersten Reglers der ersten Steuereinheit, insbesondere mittels eines PID-Reglers der ersten Steuereinheit, beeinflusst. Vorteilhafterweise wird dabei zur energetischen Umwandlung eines von dem ersten Elektromotor in dem Generatorbetrieb generierten Stroms der d-Vektor des rotorbezogenen d/q-Systems und damit der Strom I_d für den ersten Elektromotor angepasst. Des Weiteren ist insbesondere vorgesehen, dass für einen Betrieb des ersten Elektromotors über eine Versorgungsleitung ein Batteriestrom bereitgestellt wird, insbesondere über einen DC/DC-Wandler, wobei für einen Generatorbetrieb des ersten Elektromotors ein Batteriestrom-Sollwert als Eingang für den ersten Regler festgelegt wird, insbesondere ein minimaler Batteriestrom-Sollwert.

Durch die Umwandlung des Stroms direkt in dem ersten Elektromotor werden vorteilhafterweise Schäden durch die generierten Ströme weitgehend vermieden. Die Umwandlung bleibt für einen Fahrzeugnutzer dabei vorteilhafterweise weitgehend unbemerkt und ohne negative Einflüsse auf das Lenkverhalten und das Lenkgefühl. Der erste Aktuator ist insbesondere ein Feedback-Aktuator des Lenksystems, der insbesondere ausgebildet ist, über eine Lenkwelle auf eine Lenkhandhabe zu wirken. Der erste Elektromotor kann aber insbesondere auch ein Lenksteller sein, der dazu ausgebildet ist, eine erfasste Lenkvorgabe in einen Radlenkwinkel von gelenkten Rädern umzusetzen. Der erste Elektromotor ist insbesondere als ein Dreiphasenmotor ausgebildet, weiter insbesondere als ein Permanentmagnet-Synchronmotor.

Insbesondere wird die Energie zum Betreiben des ersten Elektromotors über einen DC/DC-Wandler bereitgestellt, insbesondere von einer Antriebsbatterie eines Kraftfahrzeugs. Der DC/DC-Wandler sorgt dabei für eine Bereitstellung der für den Betrieb des ersten Elektromotors erforderlichen Betriebsspannung. Vorteilhafterweise kann der DC/DC-Wandler dabei kostengünstig ausgestaltet werden, weil dieser nicht dazu ausgebildet sein muss, von dem ersten Elektromotor des Lenksystems generierte Ströme umzuwandeln oder rückzuführen.

Für die Vektorregelung erfolgt insbesondere in bekannter Weise eine mathematische Umrechnung mittels einer Clarke-Transformation und einer anschließenden Park-Transformation von einem statorbezogenen dreiphasigen System in das rotorbezogene d/q-System, wobei der d-Vektor und der q-Vektor orthogonal zueinander ausgerichtet sind. Wie bei einer Vektorregelung üblich, wird der q-Vektor zur Einstellung eines bereitzustellenden Drehmoments genutzt, wobei der d-Vektor die magnetische Flussdichte beeinflusst.

Zur energetischen Umwandlung eines von dem ersten Elektromotor in dem Generatorbetrieb generierten Stroms wird der d-Vektor des rotorbezogenen d/q-Systems für den ersten Elektromotor nun angepasst, insbesondere erhöht. Der d-Vektor wird dabei vorteilhafterweise derart angepasst, dass der generierte Strom vollständig oder zumindest nahezu vollständig umgewandelt wird. Die Anpassung des d-Vektors und somit die Anpassung des I_d-Stroms erfolgt dabei insbesondere mittels des für die Vektorregelung genutzten Reglers. Der q-Vektor und somit der I_q-Strom bleiben dabei vorteilhafterweise unbeeinflusst, sodass kein für einen Fahrzeugnutzer wahrnehmbares Drehmoment durch die Umwandlung der generierten Ströme erzeugt wird.

Mittels der Festlegung des Batteriestrom-Sollwerts als Eingang für den ersten Regler wird vorteilhafterweise ein Referenzwert vorgegeben, den der erste Regler vorteilhafterweise für die Bestimmung des anzupassenden Anteils des I_d-Stroms zugrunde legt. Der Batteriestrom-Sollwert wird vorteilhafterweise von einer Motordrehzahl des ersten Elektromotors und/oder von einem Motordrehmoment des ersten Elektromotors abhängig festgelegt. Vorteilhafterweise kann so der I_d-Strom von dem ersten Regler besonders geeignet bestimmt werden.

Eine vorteilhafte Weiterbildung sieht vor, dass für konkrete Kombinationen oder für eine konkrete Menge von Kombinationen aus der Motordrehzahl und dem Motordrehmoment jeweils ein Batteriestrom-Sollwert als der Batteriestrom-Sollwert festgelegt wird. Vorteilhafterweise kann so für einen konkreten Generatorbetrieb der Batteriestrom-Sollwert schnell und effizient festgelegt werden, und vorteilhafterweise die Anpassung des d-Vektors und somit die Bestimmung des I_d-Stroms verbessert an den konkreten Generatorbetrieb angepasst erfolgen.

Weiter vorteilhaft werden zwischen den festgelegten Batteriestrom-Sollwerten Rampenwerte festgelegt. Die Rampenwerte tragen vorteilhafterweise zur Glättung der Batteriestrom-Sollwerte bei. Diese Ausgestaltung ist besonders dann vorteilhaft, wenn nur eine bestimmte Anzahl an Referenzwerten für den Batteriestrom-Sollwert in Abhängigkeit von der Motordrehzahl und/oder dem Motordrehmoment festgelegt ist. Mit einer Rampenfunktion werden dann vorteilhafterweise Rampenwerte zwischen den festgelegten Batteriestrom-Sollwerten festgelegt, die vorteilhafterweise für den Übergang zwischen diesen festgelegten Batteriestrom-Sollwerten gelten. Vorteilhafterweise wird so weiter dazu beigetragen, dass ein Lenkgefühl im Wesentlichen unverändert bleibt.

Eine weitere vorteilhafte Ausgestaltung des Verfahrens sieht vor, dass bei dem Motorbetrieb des ersten Elektromotors ein negativer Batteriestrom-Sollwert festgelegt wird. Vorteilhafterweise wird so sichergestellt, dass kein die magnetische Flussdichte abschwächender Strom I_d eingestellt wird.

Gemäß einer weiteren vorteilhaften Ausgestaltung wird ein aktueller Batteriestrom berechnet, wobei der erste Regler den Strom I_d anpasst, insbesondere den Strom I_d erhöht, wenn der berechnete Batteriestrom kleiner als der festgelegte Batteriestrom-Sollwert ist. Vorteilhafterweise können so weiter verbessert Beeinträchtigungen durch von dem ersten Elektromotor generierten Strömen vermieden werden. Weiter vorteilhaft passt der Regler den Strom I_d derart an, dass der festgelegte Batteriestrom-Sollwert erreicht oder überschritten wird.

Eine weitere vorteilhafte Ausgestaltung sieht vor, dass der erste Regler zur Anpassung des Stroms I_d einen Kompensationsstrom bestimmt, wobei vorteilhafterweise der Kompensationsstrom auf einen im Rahmen der Vektorregelung bestimmten Strom I_d zu einem Gesamtstrom aufaddiert wird. Dieses Vorgehen ist vorteilhafterweise besonders effektiv und gut umzusetzen.

Weiter vorteilhaft wird ein maximaler Grenzwert für den Gesamtstrom festgelegt. Dieser Grenzwert für den Gesamtstrom begrenzt vorteilhafterweise auch den drehmomentbildenden q-Teil des Stromvektors, der sich auf das Lenkgefühl auswirkt. Vorteilhafterweise wird der maximale Grenzwert für den Gesamtstrom so festgelegt, dass eine Auswirkung auf das Lenkgefühl so gering wie möglich ausfällt, während vorteilhafterweise gleichzeitig sichergestellt wird, dass der Strom I_d ausreicht, um den Rückspeisestrom unter Kontrolle zu halten.

Der aktuelle Batteriestrom wird gemäß einer weiteren vorteilhaften Ausgestaltung aus an d-q-Spannungsausgängen des ersten Reglers anliegenden Spannungen U_d und U_q und den im Rahmen der Vektorregelung rückgekoppelten Strömen I_d und I_q berechnet. Insbesondere wird der Batteriestrom I_B berechnet mit I_B = U_d*I_d + U_q*lq. Vorteilhafterweise kann so weiter verbessert sichergestellt werden, dass ein aktueller Batteriestrom innerhalb zulässiger Werte liegt und zudem auf einen sich ändernden Batteriestrom vorteilhafterweise direkt reagiert werden kann.

Eine weitere vorteilhafte Ausgestaltung des Verfahrens sieht vor, dass der erste Elektromotor von einer ersten Steuereinheit auf ein Auftreten eines Generatorbetriebs überwacht wird. Vorteilhafterweise wird ein Generatorbetrieb erkannt, wenn eine erfasste Motordrehzahl des ersten Elektromotors und ein erfasstes Motordrehmoment des ersten Elektromotors entgegengesetzte Vorzeichen aufweisen. Auf diese Weise ist eine zuverlässige Erkennung mit bereits vorhandenen Sensoren ermöglicht.

Gemäß einer weiteren vorteilhaften Ausgestaltung ist ein zweiter Elektromotor vorgesehen, wobei der zweite Elektromotor in entsprechender Weise wie der erste Elektromotor angesteuert wird. Die vorstehend beschriebenen Verfahrensschritte sind dabei also in entsprechender Weise ergänzend bezogen auf den zweiten Elektromotor auszuführen. Insbesondere ist dabei der erste Elektromotor ein Elektromotor eines Feedback-Aktuators des Lenksystems und der zweite Elektromotor ein Elektromotor eines Lenkstellers des Lenksystems. Das Lenksystem umfasst entsprechend vorteilhafterweise ergänzend einen zweiten Aktuator mit einem zweiten Elektromotor, wobei der zweite Elektromotor fahrsituationsabhängig in einem Motorbetrieb oder einem Generatorbetrieb betrieben wird. Der zweite Elektromotor wird dabei vorteilhafterweise von einer zweiten Steuereinheit mittels einer Vektorregelung gesteuert, wobei vorteilhafterweise ein d-Vektor mit einem zugeordneten Strom I_d und ein q-Vektor mit einem zugeordneten Strom I_q eines rotorbezogenen d/q-Systems für den zweiten Elektromotor mittels eines zweiten Reglers der zweiten Steuereinheit beeinflusst werden, wobei zur energetischen Umwandlung eines von dem zweiten Elektromotor in dem Generatorbetrieb generierten Stroms der d-Vektor des rotorbezogenen d/q-Systems für den zweiten Elektromotor angepasst wird.

Zur Lösung der eingangs genannten Aufgabe wird des Weiteren ein elektromechanisches Lenksystem, insbesondere ein Steer-by-Wire-Lenksystem, vorgeschlagen, das einen ersten Aktuator mit einem ersten Elektromotor und einer ersten Steuereinheit umfasst, wobei der erste Elektromotor fahrsituationsabhängig in einem Motorbetrieb oder einem Generatorbetrieb betrieben werden kann, wobei der erste Aktuator insbesondere ein Feedback-Aktuator oder ein Lenksteller ist, und wobei das Lenksystem ausgebildet ist, nach einem erfindungsgemäß ausgestalteten Verfahren betrieben zu werden. Die im Zusammenhang mit dem beschriebenen Verfahren erläuterten Merkmale und Vorteile gelten entsprechend auch für das vorgeschlagene Lenksystem.

Weitere vorteilhafte Einzelheiten, Merkmale und Ausgestaltungsdetails der Erfindung werden im Zusammenhang mit den in den Figuren (nachfolgend Fig.: Figur) dargestellten Ausführungsbeispielen näher erläutert. Dabei zeigt:
- Fig. 1: in einer vereinfachten perspektivischen Darstellung ein Ausführungsbeispiel für ein erfindungsgemäß ausgebildetes elektromechanisches Lenksystem; und
- Fig. 2: ein vereinfacht dargestelltes Blockschaltbild zur Erläuterung eines Ausführungsbeispiels für ein erfindungsgemäß ausgebildetes Verfahren zum Betreiben eines elektromechanischen Lenksystems.

In den verschiedenen Figuren sind gleiche Teile in der Regel mit den gleichen Bezugszeichen versehen und werden daher mitunter auch jeweils nur im Zusammenhang mit einer der Figuren erläutert.

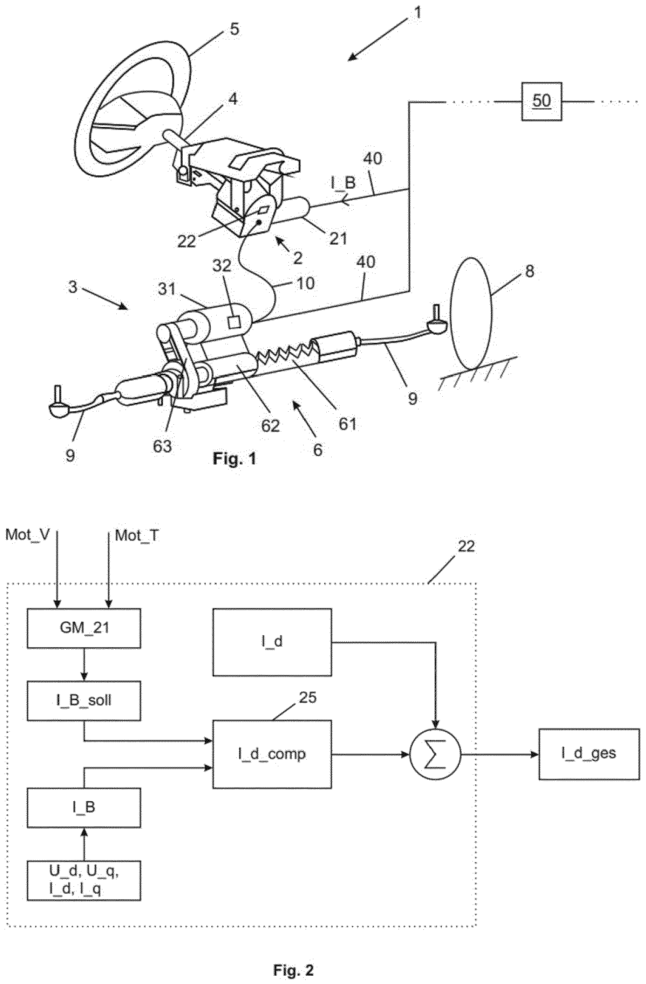

In Fig. 1 ist vereinfacht ein Ausführungsbeispiel für ein erfindungsgemäß ausgebildetes elektromechanisches Lenksystem 1 dargestellt, das in diesem Ausführungsbeispiel als Steer-by-Wire-Lenksystems ausgebildet ist. Das Lenksystem 1 umfasst einen ersten Aktuator 2 mit einem ersten Elektromotor 21 und einer ersten Steuereinheit 22. Weiter umfasst das Lenksystem 1 einen zweiten Aktuator 3 mit einem zweiten Elektromotor 31 und einer zweiten Steuereinheit 32. Der erste Aktuator 2 ist in diesem Ausführungsbeispiel ein über eine Lenkwelle 4 des Lenksystems 1 auf eine drehfest mit der Lenkwelle 4 verbundene Lenkhandhabe 5 wirkender Feedback-Aktuator und der erste Elektromotor 21 ein Feedback-Aktuator-Elektromotor. Der zweite Aktuator 3 des Lenksystems 1 ist in diesem Ausführungsbeispiel ein über ein Lenkgetriebe 6 auf lenkbare Räder 8 des Kraftfahrzeugs wirkender Lenksteller und der zweite Elektromotor 31 ein Lenksteller-Elektromotor. Beide Elektromotoren 21, 31 sind Dreiphasenmotoren, insbesondere Permanentmagnet-Synchronmotoren.

Der erste Elektromotor 21 wird fahrsituationsabhängig in einem Motorbetrieb betrieben, insbesondere zur Erzeugung eines aktiven Gegenlenkens gegen eine von einem Fahrer auf die Lenkhandhabe 5 aufgebrachte Lenkeingabe, oder in einem Generatorbetrieb betrieben, insbesondere wenn einer von einem Fahrer eingebrachten Lenkbewegung ein gewisser Lenkwiderstand entgegengebracht wird. Der erste Aktuator 2 mit dem ersten Elektromotor 21 ist also insbesondere ausgebildet, ein Drehmoment beziehungsweise ein Lenkwiderstands-Drehmoment auf die Lenkwelle 4 auszuüben, insbesondere zur Vermittlung eines für einen Fahrer eines Kraftfahrzeugs wahrnehmbaren Lenkgefühls.

Auch der zweite Elektromotor 31 kann grundsätzlich in einem Motorbetrieb und einem Generatorbetrieb betrieben werden, wobei ein Generatorbetrieb selten auftritt, beispielsweise dann, wenn den lenkbaren Räder 8 aufgrund eines Hindernisses von außen ein anderen Radlenkwinkel aufgezwungen wird. Ein Motorbetrieb des zweiten Elektromotors 31 ist dabei insbesondere dann erforderlich, wenn eine erfasste Lenkvorgabe, insbesondere eine von einem Fahrer über die Lenkhandhabe 5 eingebrachte Lenkbewegung, in einen entsprechenden Radlenkwinkel der gelenkten Räder 8 umgesetzt werden muss. Zur Umsetzung einer Lenkvorgabe in einen Radlenkwinkel der lenkbaren Räder 8 wirkt der zweite Aktuator 3 über das Lenkgetriebe 6 auf die lenkbaren Räder 8.

Konkret ist in diesem Ausführungsbeispiel vorgesehen, dass der zweite Elektromotor 31 des zweiten Aktuators 3 über einen Transmissionsriemen 63 auf einen mit einer als Zahnstange ausgebildeten Koppelstange 61 in Wirkverbindung stehenden Spindeltrieb 62 einwirkt. Durch entsprechende Ansteuerung des zweiten Elektromotors 31 wird der Spindeltrieb 62 zur Umsetzung einer Lenkvorgabe in eine Lenkbewegung der lenkbaren Räder 8 angetrieben. Dabei wirkt der zweite Aktuator über den mittels des zweiten Elektromotors 31 angetriebenen Spindeltrieb 62 auf die Koppelstange 61 und löst so eine Lenkbewegung der lenkbaren Räder 8 eines Kraftfahrzeugs aus, wobei die lenkbaren Räder 8 in diesem Ausführungsbeispiel in bekannter Weise über Spurstangen 9 mit der Koppelstange 61 verbunden sind. Die Spurstangen 9 selbst sind in bekannter Weise über Achsschenkel mit je einem gelenkten Rad 8 verbunden.

Der erste Elektromotor 21 und der zweite Elektromotor 31 des Lenksystems 1 sind über einen DC/DC-Wandler 50 mit einem Bordnetz eines Kraftfahrzeugs verbunden, wobei über den DC/DC-Wandler 50 und entsprechende Versorgungsleitungen 40 die für einen Motorbetrieb der Elektromotoren 21, 31 benötigte Energie bereitgestellt wird.

Mittels der den Elektromotoren 21, 31 zugeordneten Steuereinheiten 22, 32 werden der erste Elektromotor 21 und der zweite Elektromotor 31 jeweils basierend auf einer Vektorregelung angesteuert. Dazu wird das statorbezogene dreiphasige System in bekannter Weise in ein rotorbezogenes d/q-System überführt, was unter Verwendung einer Clarke-Transformation mit anschließender Park-Transformation durchgeführt wird. Der so für die Steuerung des jeweiligen Elektromotors 21, 31 erhaltene d-Vektor und erhaltene q-Vektor werden dann mittels eines von der jeweiligen Steuereinheit 22, 32 umfassten PID-Reglers zur Umsetzung einer Steuerungsvorgabe entsprechend angepasst. Wie üblich wird dabei über eine Anpassung des q-Werts das von dem jeweiligen Elektromotor 21, 32 bereitzustellende Drehmoment gesteuert, wohingegen der d-Wert Einfluss auf die magnetische Flussdichte hat.

In diesem Ausführungsbeispiel wird der erste Elektromotor 21 in einem Generatorbetrieb von der ersten Steuereinheit 22 mittels des von der ersten Steuereinheit 22 umfassten ersten PID-Reglers so angesteuert, dass ein in dem Generatorbetrieb des ersten Elektromotors 21 generierter Strom von dem ersten Elektromotor 21 energetisch umgewandelt wird. Der zweite Elektromotor 31 wird in diesem Ausführungsbeispiel in einem Generatorbetrieb des zweiten Elektromotors 31 zur Umwandlung von in diesem Generatorbetrieb generierten Strömen von der zweiten Steuereinheit 32 mittels des von der zweiten Steuereinheit 32 umfassten zweiten PID-Reglers prinzipiell in gleicher Weise angesteuert, wie der erste Elektromotor 21, sodass ein in dem Generatorbetrieb des zweiten Elektromotors 31 generierter Strom von dem zweiten Elektromotor 31 energetisch umgewandelt wird. Es wird daher für dieses Ausführungsbeispiel nur die Ansteuerung des ersten Elektromotors 21 in einem Generatorbetrieb näher erläutert, weil vorteilhafterweise eine entsprechende Ansteuerung auch für den zweiten Elektromotor 31 in gleicher Weise vorgesehen ist. In einer anderen Ausgestaltung kann aber insbesondere auch vorgesehen sein, den zweiten Elektromotor 31 in einer von der Ansteuerung des ersten Elektromotors 21 abweichenden Weise anzusteuern.

Wird nun der erste Elektromotor 21 in einem Generatorbetrieb betrieben, so wird der erste Elektromotor 21 von dem PID-Regler der ersten Steuereinheit 22 so angesteuert, dass der im Rahmen der Vektorregelung vorgegebene I_d-Strom für den ersten Elektromotor 21 angepasst wird, insbesondere erhöht wird, was durch entsprechende Anpassung des d-Vektors erfolgt, wodurch der in dem Generatorbetrieb des ersten Elektromotors 21 generierte Strom von dem ersten Elektromotor 21 energetisch umgewandelt wird. Dadurch, dass dabei nur der d-Vektor, nicht aber der q-Vektor angepasst wird, hat der generierte Strom vorteilhafterweise keinen Einfluss auf das von einem Fahrzeugnutzer beim Lenken wahrnehmbare Verhalten des ersten Elektromotors 21. Der von dem ersten Elektromotor 21 generierte Strom wird so vorteilhafterweise in dem ersten Elektromotor 21 "verbrannt" und belastet somit vorteilhafterweise nicht den DC/DC-Wandler 50 und auch nicht das Bordnetz. Um den d-Vektor und somit den Strom I_d geeignet anzupassen, wird für einen Generatorbetrieb des ersten Elektromotors 21 ein Batteriestrom-Sollwert als Eingangswert für den PID-Regler festgelegt.

Eine vorteilhafte Ausgestaltung eines Verfahrens zum Betreiben eines elektromechanischen Lenksystems 1 in einem Kraftfahrzeug, insbesondere des in Fig. 1 dargestellten Steer-by-Wire-Lenksystems 1, wobei das Lenksystem 1 einen ersten Aktuator 2 mit einem ersten Elektromotor 21 umfasst, und der erste Elektromotor 21 fahrsituationsabhängig in einem Motorbetrieb oder einem Generatorbetrieb GM_21 betrieben wird, wobei der erste Elektromotor 21 in dem Generatorbetrieb GM_21 so angesteuert wird, dass ein in dem Generatorbetrieb GM_21 des ersten Elektromotors 21 generierter Strom von dem ersten Elektromotor 21 energetisch umgewandelt wird, wird unter Bezugnahme auf Fig. 2 näher erläutert.

Für den Betrieb des Lenksystems 1 wird dem ersten Elektromotor 21 über eine Versorgungsleitung 40 ein Batteriestrom I_B bereitgestellt. Wie bereits erläutert, wird der erste Elektromotor 21 von der ersten Steuereinheit 22 mittels einer Vektorregelung gesteuert. Für den ersten Elektromotor 21 werden der d-Vektor mit einem zugeordneten Strom I_d und der q-Vektor mit einem zugeordneten Strom I_q des rotorbezogenen d/q-Systems mittels des PID-Reglers der ersten Steuereinheit 22 dabei entsprechend den erfassten Anforderungen und des jeweiligen damit verbundenen Betriebs (Motorbetrieb oder Generatorbetrieb) beeinflusst. Dabei wird in einem Generatorbetrieb GM_21 des ersten Elektromotors 21 zur energetischen Umwandlung eines von dem ersten Elektromotor 21 generierten Stroms der d-Vektor des rotorbezogenen d/q-Systems für den ersten Elektromotor 21 und damit der Strom I_d derart angepasst, dass der generierte Strom das Bordnetz nicht belastet.

Ein Generatorbetrieb GM_21 des ersten Elektromotors 21 wird erkannt, wenn eine erfasste Motordrehzahl Mot_V des ersten Elektromotors 21 und ein erfasstes Motordrehmoment Mot_T des ersten Elektromotors 21 entgegengesetzte Vorzeichen aufweisen. Wird ein Generatorbetrieb GM_21 erkannt, wird ein Batteriestrom-Sollwert I_B_soll als Eingang für den PID-Regler 25 der ersten Steuereinheit 22 festgelegt. Die Festlegung des Batteriestrom-Sollwerts I_B_soll hängt dabei von einer erfassten Motordrehzahl Mot_V des ersten Elektromotors 21 und von einem erfassten Motordrehmoment Mot_T des ersten Elektromotors 21 ab. Der Batteriestrom-Sollwert I_B_soll wird also für unterschiedliche Motordrehzahlen Mot_V und unterschiedliche Motordrehmomente Mot_T sowie unterschiedliche Kombinationen davon unterschiedlich festgelegt, wobei zur Stromglättung vorteilhafterweise zwischen den festgelegten Batteriestrom-Sollwerten I_B_soll Rampenwerte festgelegt werden, die insbesondere zwischen zwei festgelegten Batteriestrom-Sollwerten extrapoliert werden.

Ein aktueller Batteriestrom I_B wird dabei von der Steuereinheit 22 bestimmt. Dazu werden in diesem Ausführungsbeispiel an den d-q-Spannungsausgängen des PID-Reglers 25 aktuell anliegende Spannungen U_d und U_q erfasst und der aktuelle Batteriestrom I_B unter Berücksichtigung dieser Spannungen U_d und U_q und der im Rahmen der Vektorregelung rückgekoppelten Ströme I_d und I_q berechnet. Der PID-Regler 25 der ersten Steuereinheit 22 passt dabei einen im Rahmen der Vektorregelung bestimmten Strom I_d an, wenn der berechnete Batteriestrom I_B kleiner als der festgelegte Batteriestrom-Sollwert I_B_soll ist. Um zuverlässig zu verhindern, dass in einem Motorbetrieb des ersten Elektromotors 21 fehlerhaft ein die magnetische Flussdichte beeinflussender Strom I_d angepasst wird, wird vorteilhafterweise bei einem Motorbetrieb des ersten Elektromotors 21 ein negativer Batteriestrom-Sollwert I_B_soll festgelegt.

Wenn nun in einem Generatorbetrieb GM_21 der berechnete Batteriestrom I_B kleiner als der festgelegte Batteriestrom-Sollwert I_B_soll ist, wird der von der Vektorregelung bestimmte Strom I_d unter Nutzung des PID-Reglers 25 derart angepasst, dass der festgelegte Batteriestrom-Sollwert I_B_soll erreicht wird.

Zur Anpassung des von der Vektorregelung bestimmten Stroms I_d wird mittels des PID-Reglers 25 ein Kompensationsstrom I_d_comp ermittelt, wobei der Kompensationsstrom I_d_comp auf den im Rahmen der Vektorregelung bestimmten Strom I_d zu einem die magnetische Flussdichte beeinflussenden Gesamtstrom I_d_ges aufaddiert wird. Da dieser Gesamtstrom I_d_ges nicht beliebig groß werden kann, ist in diesem Ausführungsbeispiel vorgesehen, dass ein maximaler Grenzwert für den Gesamtstrom I_d_ges festgelegt wird, wobei dieser so gewählt wird, dass für einen Fahrzeugnutzer beim Betrieb des Lenksystems 1 ein Lenkgefühl im Wesentlichen stets unverändert bleibt.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Lenksystem
- 2: erster Aktuator
- 21: erster Elektromotor
- 22: erste Steuereinheit
- 25: erster Regler (Pl-Regler)
- 3: zweiter Aktuator
- 31: zweiter Elektromotor
- 32: zweite Steuereinheit
- 4: Lenkwelle
- 5: Lenkhandhabe
- 6: Lenkgetriebe
- 61: Koppelstange (Zahnstange)
- 62: Spindeltrieb
- 63: Transmissionsriemen
- 8: lenkbares Rad
- 9: Spurstange
- 10: Signalleitung
- 40: Versorgungsleitung
- 50: DC/DC-Wandler
- GM_21: Generatorbetrieb
- Mot_V: Motordrehzahl
- Mot_T: Motordrehmoment
- I_B: Batteriestrom
- I_B_soll: Batteriestrom-Sollwert
- I_d: die magnetische Flussdichte beeinflussender Strom der Vektorregelung
- I_q: das Drehmoment des Elektromotors beeinflussender Strom der Vektorregelung
- I_d_comp: bestimmter Anteil des Stroms I_d zur Umwandlung eines im Generatorbetrieb generierten Stroms
- I_d_ges: die magnetische Flussdichte beeinflussender resultierender Gesamtstrom
- U_d: an d-Spannungsausgang des ersten Reglers (25) anliegende Spannung
- U_q: an q-Spannungsausgang des ersten Reglers (25) anliegende Spannung

## Patentansprüche

1. Verfahren zum Betreiben eines elektromechanischen Lenksystems (1) in einem Kraftfahrzeug, wobei das Lenksystem (1) einen ersten Aktuator (2) mit einem ersten Elektromotor (21) umfasst, wobei der erste Elektromotor (21) fahrsituationsabhängig in einem Motorbetrieb oder einem Generatorbetrieb (GM_21) betrieben wird, wobei der erste Elektromotor (21) in dem Generatorbetrieb (GM_21) so angesteuert wird, dass ein in dem Generatorbetrieb (GM_21) des ersten Elektromotors (21) generierter Strom von dem ersten Elektromotor (21) energetisch umgewandelt wird, wobei der erste Elektromotor (21) von einer ersten Steuereinheit (22) mittels einer Vektorregelung gesteuert wird, wobei ein d-Vektor mit einem zugeordneten Strom I_d und ein q-Vektor mit einem zugeordneten Strom I_q eines rotorbezogenen d/q-Systems für den ersten Elektromotor (21) mittels eines ersten Reglers (25) der ersten Steuereinheit (22) beeinflusst werden, wobei zur energetischen Umwandlung eines von dem ersten Elektromotor (21) in dem Generatorbetrieb (GM_21) generierten Stroms der d-Vektor des rotorbezogenen d/q-Systems für den ersten Elektromotor (21) angepasst wird, **dadurch gekennzeichnet, dass** für einen Betrieb des ersten Elektromotors (21) über eine Versorgungsleitung (40) ein Batteriestrom (I_B) bereitgestellt wird, wobei für einen Generatorbetrieb (GM_21) des ersten Elektromotors (21) ein Batteriestrom-Sollwert (I_B_soll) als Eingang für den ersten Regler (25) festgelegt wird.

2. Verfahren nach Anspruch 1, **dadurch gekennzeichnet, dass** der Batteriestrom-Sollwert (I_B_soll) von einer Motordrehzahl (Mot_V) des ersten Elektromotors (21) festgelegt wird.

3. Verfahren nach Anspruch 1 oder Anspruch 2, **dadurch gekennzeichnet, dass** der Batteriestrom-Sollwert (I_B_soll) von einem Motordrehmoment (Mot_T) des ersten Elektromotors (21) abhängig festgelegt wird.

4. Verfahren nach Anspruch 2 und Anspruch 3, **dadurch gekennzeichnet, dass** für konkrete Kombinationen oder für eine konkrete Menge von Kombinationen aus der Motordrehzahl (Mot_V) und dem Motordrehmoment jeweils ein Batteriestrom-Sollwert (I_B_soll) als der Batteriestrom-Sollwert (I_B_soll) festgelegt wird.

5. Verfahren nach Anspruch 4, **dadurch gekennzeichnet, dass** zwischen den festgelegten Batteriestrom-Sollwerten (I_B_soll) Rampenwerte festgelegt werden.

6. Verfahren nach einem der Ansprüche 1 bis 5, **dadurch gekennzeichnet, dass** bei dem Motorbetrieb des ersten Elektromotors (21) ein negativer Batteriestrom-Sollwert (I_B_soll) festgelegt wird.

7. Verfahren nach einem der Ansprüche 1 bis 6, **dadurch gekennzeichnet, dass** der aktuelle Batteriestrom (I_B) berechnet wird, wobei der erste Regler (25) den Strom I_d anpasst, wenn der berechnete Batteriestrom (I_B) kleiner als der festgelegte Batteriestrom-Sollwert (I_B_soll) ist.

8. Verfahren nach Anspruch 7, **dadurch gekennzeichnet, dass** der erste Regler (25) den Strom I_d derart anpasst, dass der festgelegte Batteriestrom-Sollwert (I_B_soll) erreicht oder überschritten wird.

9. Verfahren nach Anspruch 7 oder Anspruch 8, **dadurch gekennzeichnet, dass** der erste Regler (25) zur Anpassung des Stroms I_d einen Kompensationsstrom (I_d_comp) bestimmt, wobei der Kompensationsstrom (I_d_comp) auf einen im Rahmen der Vektorregelung bestimmten Strom I_d zu einem Gesamtstrom (I_d_ges) aufaddiert wird.

10. Verfahren nach Anspruch 9, **dadurch gekennzeichnet, dass** ein maximaler Grenzwert für den Gesamtstrom (I_d_ges) festgelegt wird.

11. Verfahren nach einem der Ansprüche 7 bis 10, **dadurch gekennzeichnet, dass** der aktuelle Batteriestrom (I_B) aus an d-q-Spannungsausgängen des ersten Reglers (25) anliegenden Spannungen U_d und U_q und den im Rahmen der Vektorregelung rückgekoppelten Strömen I_d und I_q berechnet wird.

12. Verfahren nach einem der vorstehenden Ansprüche, **dadurch gekennzeichnet, dass** ein Generatorbetrieb (GM_21) erkannt wird, wenn eine erfasste Motordrehzahl (Mot_V) des ersten Elektromotors (21) und ein erfasstes Motordrehmoment (Mot_T) des ersten Elektromotors (21) entgegengesetzte Vorzeichen aufweisen.

13. Verfahren nach einem der vorstehenden Ansprüche, **gekennzeichnet durch** einen zweiten Elektromotor (31), wobei der zweite Elektromotor (31) in entsprechender Weise wie der erste Elektromotor (21) angesteuert wird.

14. Elektromechanisches Lenksystem (1), das einen ersten Aktuator (2) mit einem ersten Elektromotor (21) und einer ersten Steuereinheit (22) umfasst, wobei der erste Elektromotor (21) fahrsituationsabhängig in einem Motorbetrieb oder einem Generatorbetrieb (GM_21) betrieben werden kann, **dadurch gekennzeichnet, dass** das Lenksystem (1) ausgebildet ist, nach einem Verfahren gemäß einem der Ansprüche 1 bis 13 betrieben zu werden.

## Claims

1. Method for operating an electromechanical steering system (1) in a motor vehicle, wherein the steering system (1) comprises a first actuator (2) having a first electric motor (21), wherein the first electric motor (21) is operated in a motor mode or a generator mode (GM_21) depending on the driving situation, wherein, in generator mode (GM_21), the first electric motor (21) is actuated in such a way that a current that is generated in generator mode (GM_21) of the first electric motor (21) is converted energetically by the first electric motor (21), wherein the first electric motor (21) is controlled by a first control unit (22) by means of vector control, wherein a d-vector having an associated current I_d and a q-vector having an associated current I_q of a rotor-referred d/q system for the first electric motor (21) are influenced by means of a first controller (25) of the first control unit (22), wherein the d-vector of the rotor-referred d/q system for the first electric motor (21) is adapted for the energetic conversion of a current that is generated by the first electric motor (21) in generator mode (GM_21), **characterized in that** a battery current (I_B) is provided via a supply line (40) for operation of the first electric motor (21), wherein a battery current setpoint (I_B_soll) is defined as the input for the first controller (25) for a generator mode (GM_21) of the first electric motor (21).

2. Method according to Claim 1, **characterized in that** the battery current setpoint (I_B_soll) is defined by a motor speed (Mot_V) of the first electric motor (21).

3. Method according to Claim 1 or Claim 2, **characterized in that** the battery current setpoint (I_B_soll) is defined depending on a motor torque (Mot_T) of the first electric motor (21).

4. Method according to Claim 2 and Claim 3, **characterized in that** a respective battery current setpoint (I_B_soll) is defined as the battery current setpoint (I_B_soll) for specific combinations or for a specific set of combinations of the motor speed (Mot_V) and the motor torque.

5. Method according to Claim 4, **characterized in that** ramp values are defined between the defined battery current setpoints (I_B_soll).

6. Method according to any one of Claims 1 to 5, **characterized in that** a negative battery current setpoint (I_B_soll) is defined in the motor mode of the first electric motor (21).

7. Method according to any one of Claims 1 to 6, **characterized in that** the present battery current (I_B) is calculated, wherein the first controller (25) adapts the current I_d when the calculated battery current (I_B) is lower than the defined battery current setpoint (I_B_soll).

8. Method according to Claim 7, **characterized in that** the first controller (25) adapts the current I_d in such a way that the defined battery current setpoint (I_B_soll) is reached or exceeded.

9. Method according to Claim 7 or Claim 8, **characterized in that** the first controller (25) determines a compensation current (I_d_comp) to adjust the current I_d, wherein the compensation current (I_d_comp) is added to a current I_d determined as part of the vector control to form a total current (I_d_ges).

10. Method according to Claim 9, **characterized in that** a maximum limit value is defined for the total current (I_d_ges).

11. Method according to any one of Claims 7 to 10, **characterized in that** the present battery current (I_B) is calculated from voltages U_d and U_q that are applied to d-q voltage outputs of the first controller (25) and from the currents I_d and I_q that are fed back as part of the vector control.

12. Method according to any one of the preceding claims, **characterized in that** a generator mode (GM_21) is identified when a detected motor speed (Mot_V) of the first electric motor (21) and a detected motor torque (Mot_T) of the first electric motor (21) have opposite signs.

13. Method according to any one of the preceding claims, **characterized by** a second electric motor (31), wherein the second electric motor (31) is actuated in a corresponding manner to the first electric motor (21).

14. Electromechanical steering system (1), which comprises a first actuator (2) having a first electric motor (21) and having a first control unit (22), wherein the first electric motor (21) can be operated in a motor mode or a generator mode (GM_21) depending on the driving situation, **characterized in that** the steering system (1) is designed to be operated according to a method according to any one of Claims 1 to 13.

## Revendications

1. Procédé de fonctionnement d'un système de direction électromécanique (1) dans un véhicule automobile, dans lequel le système de direction (1) comprend un premier actionneur (2) doté d'un premier moteur électrique (21), dans lequel le premier moteur électrique (21) fonctionne en mode moteur ou en mode générateur (GM_21) en fonction de la situation de conduite, dans lequel, en mode générateur (GM_21), le premier moteur électrique (21) est actionné de telle sorte qu'un courant généré en mode générateur (GM_21) du premier moteur électrique (21) soit converti en énergie par le premier moteur électrique (21), le premier moteur électrique (21) étant commandé par une première unité de commande (22) au moyen d'une commande vectorielle, un vecteur d associé à un courant I_d et un vecteur q associé à un courant I_q d'un système d/q référencé au rotor pour le premier moteur électrique (21) étant influencés au moyen d'un premier régulateur (25) de la première unité de commande (22), le vecteur d du système d/q référencé au rotor pour le premier moteur électrique (21) étant adapté à la conversion énergétique d'un courant généré par le premier moteur électrique (21) en mode générateur (GM_21), **caractérisé en ce qu'**un courant de batterie (I_B) est fourni via une ligne d'alimentation (40) pour le fonctionnement du premier moteur électrique (21), une valeur de consigne de courant de batterie (I_B_soll) étant défini comme entrée pour le premier régulateur (25) dans le cadre d'un mode générateur (GM_21) du premier moteur électrique (21).

2. Procédé selon la revendication 1, **caractérisé en ce que** la valeur de consigne de courant de batterie (I_B_soll) est définie par une vitesse de moteur (Mot_V) du premier moteur électrique (21).

3. Procédé selon la revendication 1 ou la revendication 2, **caractérisé en ce que** la valeur de consigne de courant de batterie (I_B_soll) est définie en fonction d'un couple moteur (Mot_T) du premier moteur électrique (21).

4. Procédé selon la revendication 2 et la revendication 3, **caractérisé en ce qu'**une valeur de consigne de courant de batterie (I_B_soll) respective est définie comme valeur de consigne de courant de batterie (I_B_soll) pour des combinaisons spécifiques ou pour un ensemble spécifique de combinaisons de la vitesse du moteur (Mot_V) et du couple moteur.

5. Procédé selon la revendication 4, **caractérisé en ce que** des valeurs de rampe sont définies entre les valeurs de consigne de courant de batterie (I_B_soll) définies.

6. Procédé selon l'une quelconque des revendications 1 à 5, **caractérisé en ce qu'**une valeur de consigne de courant de batterie négative (I_B_soll) est définie en mode moteur du premier moteur électrique (21).

7. Procédé selon l'une quelconque des revendications 1 à 6, **caractérisé en ce que** le courant actuel de la batterie (I_B) est calculé, le premier régulateur (25) adaptant le courant I_d lorsque le courant calculé de la batterie (I_B) est inférieur à la valeur de consigne de courant de batterie définie (I_B_soll).

8. Procédé selon la revendication 7, **caractérisé en ce que** le premier régulateur (25) adapte le courant I_d de telle sorte que la valeur de consigne de courant de batterie définie (I_B_soll) soit atteinte ou dépassée.

9. Procédé selon la revendication 7 ou la revendication 8, **caractérisé en ce que** le premier régulateur (25) détermine un courant de compensation (I_d_comp) pour ajuster le courant I_d, le courant de compensation (I_d_comp) étant ajouté à un courant I_d déterminé dans le cadre de la commande vectorielle pour former un courant total (I_d_ges).

10. Procédé selon la revendication 9, **caractérisé en ce qu'**une valeur limite maximale est définie pour le courant total (I_d_ges).

11. Procédé selon l'une quelconque des revendications 7 à 10, **caractérisé en ce que** le courant actuel de la batterie (I_B) est calculé à partir des tensions U_d et U_q qui sont appliquées aux sorties de tension d-q du premier régulateur (25) et à partir des courants I_d et I_q qui sont renvoyés dans le cadre de la commande vectorielle.

12. Procédé selon l'une quelconque des revendications précédentes, **caractérisé en ce qu'**un mode générateur (GM_21) est identifié lorsqu'une vitesse de moteur détectée (Mot_V) du premier moteur électrique (21) et un couple de moteur détecté (Mot_T) du premier moteur électrique (21) ont des signes opposés.

13. Procédé selon l'une quelconque des revendications précédentes, **caractérisé par** un deuxième moteur électrique (31), dans lequel le deuxième moteur électrique (31) est actionné de manière analogue au premier moteur électrique (21).

14. Système de direction électromécanique (1), qui comprend un premier actionneur (2) comportant un premier moteur électrique (21) et une première unité de commande (22), le premier moteur électrique (21) pouvant fonctionner en mode moteur ou en mode générateur (GM_21) en fonction de la situation de conduite, **caractérisé en ce que** le système de direction (1) est conçu pour fonctionner selon un procédé selon l'une quelconque des revendications 1 à 13.
